# EUROPEAN PATENT APPLICATION

(11) **EP 4 394 345 A1**
(43) Date of publication of application: **03.07.2024**
(21) Application number: 22861734.6
(22) Date of filing: 25.08.2022
(51) Int. Cl.: G01M 3/04, G01M 3/38, G01D 5/353, G08C 17/02, G06Q 50/10

(54) **HYDROGEN LEAK DETECTION SYSTEM, HYDROGEN LEAK DETECTION METHOD, AND HYDROGEN TRANSPORT PIPELINE CAPABLE OF HYDROGEN LEAK DETECTION**

(30) Priority: 25.08.2021 KR 20210111994
(71) Applicant: LS Cable & System Ltd., Anyang-si, Gyeonggi-do 14119 (KR)
(72) Inventor: PARK, Lae Hyuk, Seoul 07362 (KR); WON, Yonghee, Seoul 08090 (KR); KIM, Bong Suk, Suwon-si Gyeonggi-do 16504 (KR); LEE, Jae Ik, Seoul 06372 (KR)
(74) Representative: K&L Gates LLP
(86) International application number: PCT/KR2022/012740
(87) International publication number: WO 2023/027526

(57) **Abstract**

A hydrogen leak detection system of a hydrogen transport pipeline, which comprises a pipe-shaped transport inner pipe for transporting a hydrogen fluid, and an outer protection layer surrounding the outer circumference of the transport inner pipe, comprises: one or more optical fiber unit which is disposed along the length direction of the hydrogen transport pipeline and comprises one or more optical fiber for detecting hydrogen leaking from the transport inner pipe, and an optical fiber protection layer surrounding the one or more optical fiber; a hydrogen detection unit which comprises an optical signal generator for providing an optical signal to the one or more optical fiber, and an optical characteristics detection unit capable of detecting the optical characteristics of the one or more optical fiber; and a control unit which stores a normal optical characteristics range of the one or more optical fiber, for a normal state where hydrogen is not detected from the one or more optical fiber, and determines that hydrogen is leaking from the hydrogen transport pipeline if the optical characteristics value of the one or more optical fiber, detected by the optical characteristics detection unit, is determined to exceed the normal optical characteristics range.

## Description

### [Technical Field]

The present invention relates to a hydrogen leak detection system, a hydrogen leak detection method, and a hydrogen transport pipeline capable of hydrogen leak detection, and more particularly, to a hydrogen leak detection system, a hydrogen leak detection method, and a hydrogen transport pipeline capable of hydrogen leak detection, capable of detecting a hydrogen leak by using an optical fiber.

### [Background Art]

Recently, due to environmental issues, a demand for using hydrogen energy instead of traditional oil energy is further increasing, so that charging stations and storages are expected to be installed in remote areas or within large cities to conveniently utilize hydrogen, and a pipeline network for hydrofen supply to such places is expected to be increased.

Since hydrogen pipelines pass through large areas with many people, vehicles, and the like, such as downtown areas, and such regions are distributed over a wide area, a hydrogen detection technology for detecting a leak state of hydrogen having a high risk of explosion is important.

However, according to a conventional hydrogen detection method, hydrogen detection sensors are installed at several points in a charging station and a storage, such as in a tank or around the tank, to detect a hydrogen leak, thereby eliminating the risk. Since the hydrogen leak may not be detected over the whole hydrogen pipeline, a major explosion accident may occur when the hydrogen is leaking.

### [Disclosure]

### [Technical Problem]

Therefore, an object of the present invention is to provide a hydrogen leak detection system, a hydrogen leak detection method, and a hydrogen transport pipeline capable of hydrogen leak detection, capable of detecting whether hydrogen is leaking over an entire region of the hydrogen transport pipeline by using an optical fiber.

### [Technical Solution]

To achieve the object described above, according to the present invention, a hydrogen leak detection system for a hydrogen transport pipeline including a pipe-shaped transport inner pipe for transporting a hydrogen fluid and an outer protection layer surrounding an outer circumference of the transport inner pipe includes: a hydrogen detection unit including at least one optical fiber unit disposed in a longitudinal direction of the hydrogen transport pipeline and including at least one optical fiber for detecting hydrogen leaking from the transport inner pipe and an optical fiber protection layer surrounding the at least one optical fiber, an optical signal generator for providing an optical signal to the at least one optical fiber, and an optical characteristic detection unit capable of detecting an optical characteristic of the at least one optical fiber; and a control unit for storing a normal optical characteristic range of the at least one optical fiber for a normal state in which hydrogen is not detected from the at least one optical fiber, and determining that hydrogen is leaking from the hydrogen transport pipeline when an optical characteristic value of the at least one optical fiber detected by the optical characteristic detection unit is determined to exceed the normal optical characteristic range. Since the optical fiber capable of detecting the hydrogen is disposed along the hydrogen transport pipeline, it may be determined in real time whether the hydrogen is leaking over an entire region of the hydrogen transport pipeline, so that a negligent accident caused by a hydrogen leak may be prevented, and thus safety of hydrogen use may be improved.

In this case, the transport inner pipe may include a hydrogen blocking layer, and a hydrogen permeability coefficient of the hydrogen blocking layer at 25 °C and 1.5 bar may be less than or equal to 1 cm3·cm/(m2·24h·atm), which may be preferable because the hydrogen that is being transported may be prevented from leaking to an outside.

In addition, the transport inner pipe may preferably include a transport inner layer, a hydrogen blocking layer surrounding the transport inner layer, and a transport outer layer surrounding the hydrogen blocking layer, and the transport inner layer and the hydrogen blocking layer, and the hydrogen blocking layer and the transport outer layer may preferably adhere to each other by an adhesive layer, which may prevent the hydrogen leak and increase stability of hydrogen transport of the hydrogen transport pipeline.

In this case, a hydrogen permeability coefficient of the optical fiber protection layer at 25 °C and 1.5 bar may be preferably greater than or equal to 10 times a hydrogen permeability coefficient of the hydrogen blocking layer at 25 °C and 1.5 bar, and a hydrogen permeability coefficient of the optical fiber protection layer at 25 °C and 1.5 bar may be preferably greater than or equal to 10 cm3·cm/(m2·24h·atm), which may allow the optical fiber to detect the hydrogen leak because the hydrogen may easily permeate the optical fiber protection layer when the hydrogen is leaking from the transport inner pipe. The optical fiber protection layer may include at least one of polyvinyl chloride (PVC), nylon, low-smoke zero-halogen (LSZH), polyethylene (PE), and polypropylene (PP), which may be preferable by stably protecting the optical fiber from an external shock and the like while allowing the hydrogen to permeate.

In addition, the at least one optical fiber unit may be a loose tube-type optical fiber unit in which the at least one optical fiber is loosely accommodated in the optical fiber protection layer having a tube shape, or the at least one optical fiber unit may be a tight buffer-type optical fiber unit including the optical fiber protection layer that tightly surrounds an outer circumference of the at least one optical fiber.

In this case, the at least one optical fiber unit may be disposed between the transport inner pipe and the outer protection layer, which may be preferable by allowing the outer protection layer to provide protection against the external shock and stably detecting the hydrogen leak.

In addition, the at least one optical fiber unit may be spirally wound in a spiral shape around the outer circumference of the transport inner pipe, which may be preferable because the leaked hydrogen may be detected without being biased toward one area of a section of the transport inner pipe.

In this case, the outer protection layer may include a structure reinforcement layer surrounding the outer circumference of the transport inner pipe, and an outermost layer surrounding an outer circumference of the structure reinforcement layer, which may be preferable by increasing stability of the hydrogen transport pipeline against the external shock.

In addition, the at least one optical fiber unit may be spirally wound in a spiral shape around the outer circumference of the structure reinforcement layer or an outer circumference of the outermost layer instead of the outer circumference of the transport inner pipe.

In this case, the structure reinforcement layer may be formed of fiber-reinforced plastic (FRP), which may be preferable by ensuring a pressure-resistant characteristic to withstand a high-level pressure that occurs during the hydrogen transport and increasing the stability of the hydrogen transport pipeline against the external shock.

In addition, the normal optical characteristic range of the at least one optical fiber may be a normal optical loss range in a wavelength band of 1240 nm, and the control unit may determine that the hydrogen is leaking when a detected optical loss of the optical signal exceeds the normal optical loss range, which may be preferable because the hydrogen may be detected sensitively and accurately from the optical fiber.

In this case, the control unit may determine a degree of a hydrogen leak from the hydrogen transport pipeline according to a degree by which the optical characteristic value of the at least one optical fiber deviates from the normal optical characteristic range, which may be preferable because a leak amount of the hydrogen leaking from the hydrogen transport pipeline may be accurately determined.

In addition, the control unit may determine that the hydrogen is not leaking when the optical characteristic value of the at least one optical fiber for the hydrogen, which is detected by the optical characteristic detection unit, exceeds the normal optical characteristic range and remains within the normal optical characteristic range for a predetermined time or more, and may determine that repair of the hydrogen transport pipeline is completed so as to supply the hydrogen to the hydrogen transport pipeline and operate normally when the hydrogen is determined not to leak, which may be preferable.

In addition, the control unit may calculate a hydrogen leak location of the hydrogen transport pipeline based on the optical characteristic value detected by the optical characteristic detection unit, so that the hydrogen leak location of the hydrogen transport pipeline corresponding to a location of the optical fiber may be calculated.

In this case, a communication unit for transmitting data to an external device may be further included, and the control unit may control the communication unit to transmit information on the hydrogen transport pipeline, which includes the calculated hydrogen leak location of the hydrogen transport pipeline and cut-off of hydrogen supply to the hydrogen transport pipeline, to a preset external device, which may be preferable because maintenance and repair personnel may be dispatched to the hydrogen leak location to block a leak portion.

Meanwhile, to achieve the object described above, according to the present invention, a hydrogen leak detection method for a hydrogen transport pipeline including a pipe-shaped transport inner pipe for transporting a hydrogen fluid and an outer protection layer surrounding an outer circumference of the transport inner pipe includes: arranging at least one optical fiber unit, which includes at least one optical fiber for detecting hydrogen leaking from the transport inner pipe and an optical fiber protection layer surrounding the at least one optical fiber, in a longitudinal direction of the hydrogen transport pipeline; providing an optical signal to the at least one optical fiber; detecting the optical signal from the at least one optical fiber; determining whether a detected optical characteristic value of the at least one optical fiber exceeds a normal optical characteristic range; and determining that hydrogen is leaking from the hydrogen transport pipeline when the detected optical characteristic value of the optical fiber is determined to exceed the normal optical characteristic range. Since the optical fiber capable of detecting the hydrogen is disposed along the hydrogen transport pipeline, it may be determined in real time whether the hydrogen is leaking over an entire region of the hydrogen transport pipeline, so that a negligent accident caused by a hydrogen leak may be prevented, and thus safety of hydrogen use may be improved.

In this case, the transport inner pipe may include a hydrogen blocking layer, and a hydrogen permeability coefficient of the hydrogen blocking layer at 25 °C and 1.5 bar may be less than or equal to 1 cm³·cm/(m²·24h·atm), which may be preferable because the hydrogen that is being transported may be prevented from leaking to an outside.

In addition, a hydrogen permeability coefficient of the optical fiber protection layer at 25 °C and 1.5 bar may be preferably greater than or equal to 10 times a hydrogen permeability coefficient of the hydrogen blocking layer at 25 °C and 1.5 bar, and a hydrogen permeability coefficient of the optical fiber protection layer at 25 °C and 1.5 bar may be preferably greater than or equal to 10 cm³·cm/(m²·24h·atm), which may allow the optical fiber to detect the hydrogen leak because the hydrogen may easily permeate the optical fiber protection layer when the hydrogen is leaking from the transport inner pipe.

In this case, the normal optical characteristic range of the at least one optical fiber may be a normal optical loss range in a wavelength band of 1240 nm, and the determining that the hydrogen is leaking from the hydrogen transport pipeline may include determining that the hydrogen is leaking when an optical loss of the detected optical signal exceeds the normal optical loss range, which may be preferable because the hydrogen may be detected sensitively and accurately from the optical fiber.

Meanwhile, to achieve the object described above, according to the present invention, a hydrogen transport pipeline capable of hydrogen leak detection by using an optical fiber includes: a pipe-shaped transport inner pipe for transporting a hydrogen fluid; an outer protection layer surrounding an outer circumference of the transport inner pipe; and at least one optical fiber unit disposed outside the transport inner pipe in a longitudinal direction of the hydrogen transport pipeline, and including at least one optical fiber for detecting hydrogen leaking from the transport inner pipe and an optical fiber protection layer surrounding the at least one optical fiber. Since the optical fiber capable of detecting the hydrogen is disposed along the hydrogen transport pipeline, it may be determined in real time whether the hydrogen is leaking over an entire region of the hydrogen transport pipeline, so that a negligent accident caused by a hydrogen leak may be prevented, and thus safety of hydrogen use may be improved.

In this case, the transport inner pipe may include a hydrogen blocking layer, and a hydrogen permeability coefficient of the hydrogen blocking layer at 25 °C and 1.5 bar may be less than or equal to 1 cm³·cm/(m²·24h·atm), which may be preferable because the hydrogen that is being transported may be prevented from leaking to an outside.

In addition, the transport inner pipe may preferably include a transport inner layer, a hydrogen blocking layer surrounding the transport inner layer, and a transport outer layer surrounding the hydrogen blocking layer, and the transport inner layer and the hydrogen blocking layer, and the hydrogen blocking layer and the transport outer layer may preferably adhere to each other by an adhesive layer, which may prevent the hydrogen leak and increase stability of hydrogen transport of the hydrogen transport pipeline.

In this case, a hydrogen permeability coefficient of the optical fiber protection layer at 25 °C and 1.5 bar may be preferably greater than or equal to 10 times a hydrogen permeability coefficient of the hydrogen blocking layer at 25 °C and 1.5 bar, and a hydrogen permeability coefficient of the optical fiber protection layer at 25 °C and 1.5 bar may be preferably greater than or equal to 10 cm³·cm/(m²·24h·atm), which may allow the optical fiber to detect the hydrogen leak because the hydrogen may easily permeate the optical fiber protection layer when the hydrogen is leaking from the transport inner pipe. The optical fiber protection layer may include at least one of polyvinyl chloride (PVC), nylon, low-smoke zero-halogen (LSZH), polyethylene (PE), and polypropylene (PP), which may be preferable by stably protecting the optical fiber from an external shock and the like while allowing the hydrogen to permeate.

In addition, the at least one optical fiber unit may be a loose tube-type optical fiber unit in which the at least one optical fiber is loosely accommodated in the optical fiber protection layer having a tube shape, or the at least one optical fiber unit may be a tight buffer-type optical fiber unit including the optical fiber protection layer that tightly surrounds an outer circumference of the at least one optical fiber.

In this case, the at least one optical fiber unit may be disposed between the transport inner pipe and the outer protection layer, which may be preferable by allowing the outer protection layer to provide protection against the external shock and stably detecting the hydrogen leak.

In addition, the at least one optical fiber unit may be spirally wound in a spiral shape around the outer circumference of the transport inner pipe, which may be preferable because the leaked hydrogen may be detected without being biased toward one area of a section of the transport inner pipe.

In this case, the outer protection layer may include a structure reinforcement layer surrounding the outer circumference of the transport inner pipe, and an outermost layer surrounding an outer circumference of the structure reinforcement layer, which may be preferable by increasing stability of the hydrogen transport pipeline against the external shock.

In addition, the at least one optical fiber unit may be spirally wound in a spiral shape around the outer circumference of the structure reinforcement layer or an outer circumference of the outermost layer instead of the outer circumference of the transport inner pipe.

In addition, the structure reinforcement layer may be formed of fiber-reinforced plastic (FRP), which may be preferable by increasing the stability of the hydrogen transport pipeline against the external shock.

### [Advantageous Effects]

According to the present invention, since an optical fiber capable of detecting hydrogen is disposed along a hydrogen transport pipeline, it can be determined in real time whether the hydrogen is leaking over an entire region of the hydrogen transport pipeline, so that a negligent accident caused by a hydrogen leak can be prevented, and thus safety of hydrogen use can be improved.

In addition, a hydrogen blocking layer can prevent the hydrogen that is being transported from leaking to an outside, and a transport inner layer, the hydrogen blocking layer, and a transport outer layer of a transport inner pipe can prevent the hydrogen leak and increase stability of hydrogen transport of the hydrogen transport pipeline.

In addition, the optical fiber can stably detect the hydrogen leak because the hydrogen can easily permeate the optical fiber protection layer when the hydrogen is leaking from the transport inner pipe, and the optical fiber can be stably protected from an external shock and the like.

In addition, the leaked hydrogen can be detected without being biased toward one area of a section of the hydrogen transport pipeline, and the hydrogen leaking to the outside of the hydrogen transport pipeline can be detected. In addition, a leak amount of the hydrogen leaking from the hydrogen transport pipeline can be determined, and it can be determined that repair of the hydrogen transport pipeline is completed so as to supply the hydrogen to the hydrogen transport pipeline and operate normally.

In addition, a hydrogen leak location of the hydrogen transport pipeline may be calculated so that maintenance and repair can be facilitated, and maintenance and repair personnel can be dispatched to the hydrogen leak location to block a leak portion.

### [Description of Drawings]

FIG. 1 is a view for schematically describing a hydrogen leak detection system according to the present invention.
FIG. 2 is a view illustrating a hydrogen transport pipeline and an optical fiber unit.
FIG. 3 is a view illustrating an arrangement of an optical fiber.
FIG. 4 is a view illustrating a loose tube-type optical fiber unit and a tight buffer-type optical fiber unit.
FIG. 5 is a flowchart of a hydrogen leak detection method for a hydrogen transport pipeline according to the present invention.
FIG. 6 is a view showing a modified example of a hydrogen leak detection method for a hydrogen transport pipeline.
FIG. 7 is a graph showing a variation in an optical loss in a hydrogen atmosphere according to a wavelength of an optical signal.
FIG. 8 is a control block diagram.

### [Best Mode]

Hereinafter, a hydrogen leak detection system 1 according to an exemplary embodiment of the present invention will be described in detail with reference to the accompanying drawings.

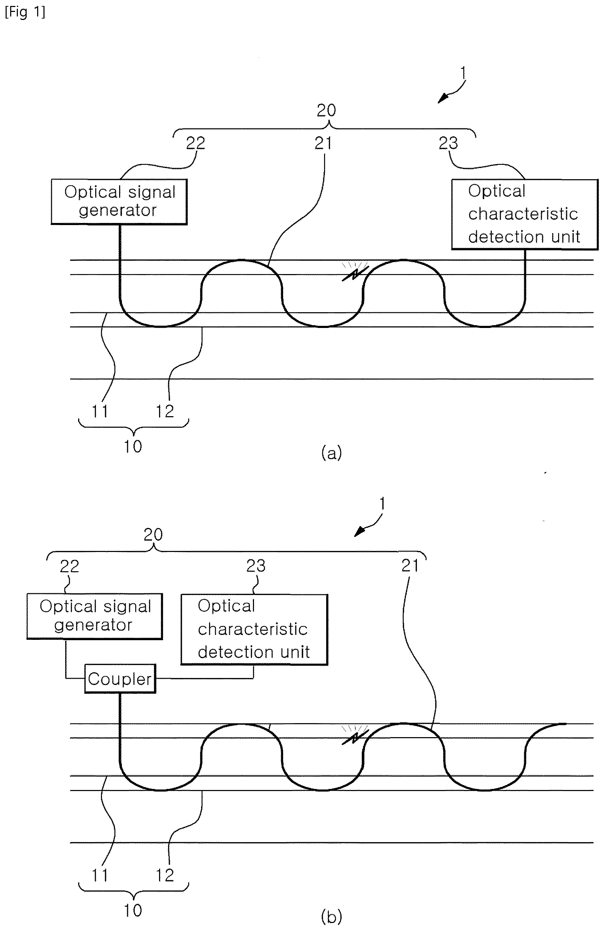

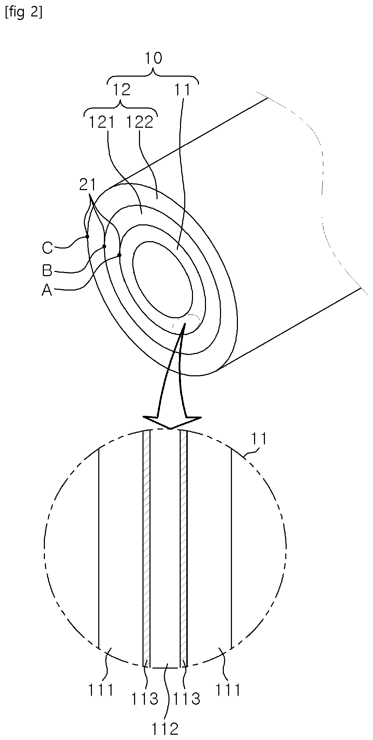

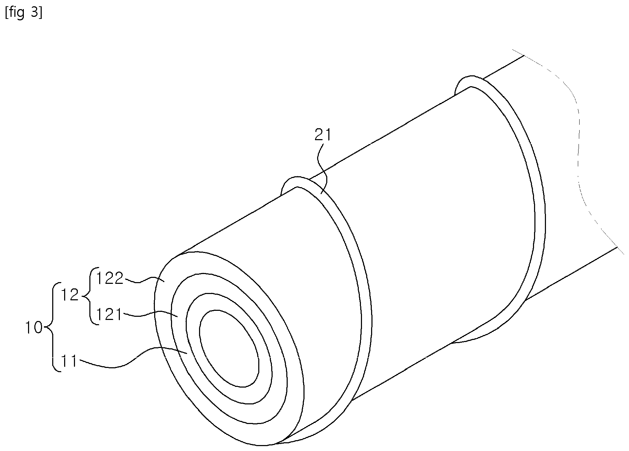

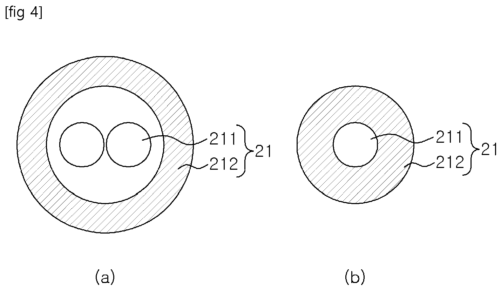

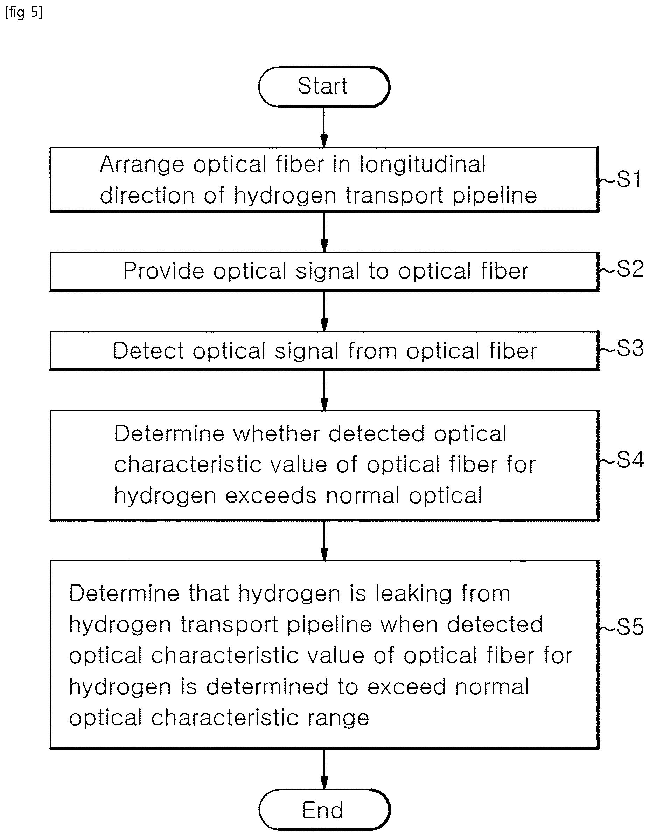

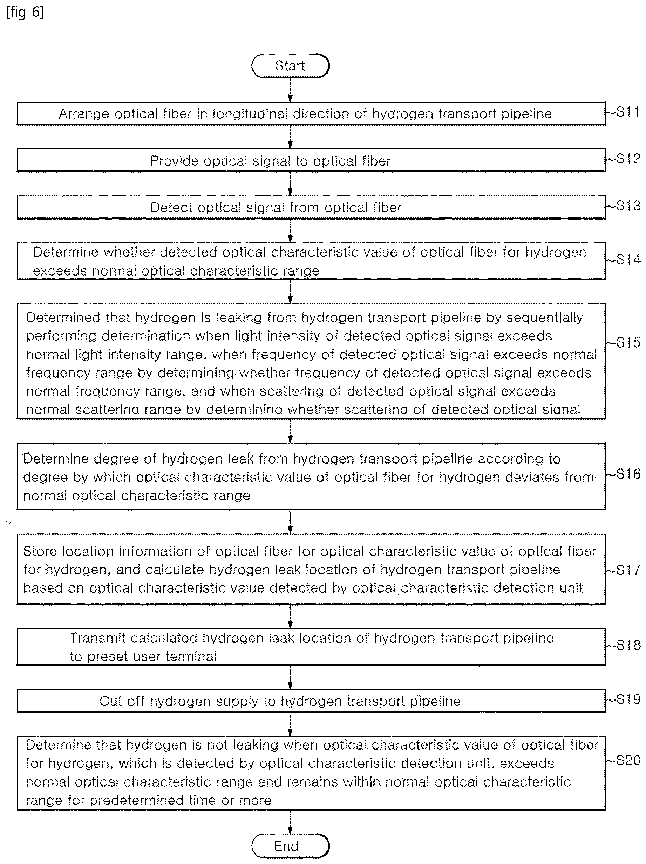

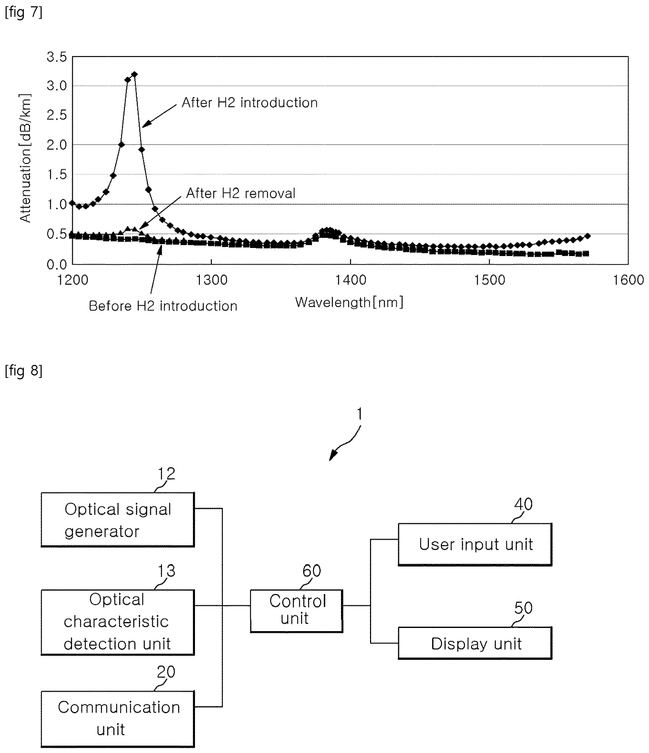

FIG. 1 is a view for schematically describing a hydrogen leak detection system 1 according to the present invention, FIG. 2 is a view illustrating a hydrogen transport pipeline 10 and an optical fiber unit 21, FIG. 3 is a view illustrating an arrangement of an optical fiber 211, FIG. 4 is a view illustrating a loose tube-type optical fiber unit and a tight buffer-type optical fiber unit, FIG. 5 is a flowchart of a hydrogen leak detection method for a hydrogen transport pipeline 10 according to the present invention, FIG. 6 is a view showing a modified example of a hydrogen leak detection method for a hydrogen transport pipeline 10, FIG. 7 is a graph showing a variation in an optical loss in a hydrogen atmosphere according to a wavelength of an optical signal, and FIG. 8 is a control block diagram of the hydrogen leak detection system 1.

The hydrogen leak detection system 1 may include a hydrogen transport pipeline 10, a hydrogen detection unit 20, a communication unit 30, a user input unit 40, a display unit 50, and a control unit 60.

The hydrogen transport pipeline 10 may include a transport inner pipe 11 and an outer protection layer 12.

The transport inner pipe 11 may serve to transport hydrogen while blocking the hydrogen from permeating to an outside, may have a single-layer or multilayer structure, and may have a pipe shape for transporting a hydrogen fluid. The transport inner pipe 11 may essentially include a hydrogen blocking layer 112, and according to an embodiment of the present invention, the transport inner pipe 11 may include a transport inner layer 111, a hydrogen blocking layer 112, an adhesive layer 113, and a transport outer layer 114.

The transport inner layer 111 may be formed of a polymer material such as polyethylene (PE), polypropylene (PP), or polyamide (PA), and may be disposed on an innermost side making contact with the hydrogen fluid.

The hydrogen blocking layer 112 may be a component for blocking the hydrogen from permeating to the outside, and according to the embodiment of the present invention, the hydrogen blocking layer 112 may airtightly surround an outer side of the transport inner layer 111. The hydrogen blocking layer 112 may serve to prevent the hydrogen from leaking or permeating to the outside, and may be formed of a material having a low hydrogen permeability, such as ethylene vinyl alcohol (EVOH), aluminum (AL), copper (Cu), lead (Pb), or stainless steel. A hydrogen permeability coefficient of the hydrogen blocking layer 112 at 25 °C and 1.5 bar may be preferably less than or equal to 1 cm³·cm/(m²·24h·atm).

In this case, the hydrogen permeability coefficient refers to a characteristic capable of determining hydrogen permeation blocking performance, in which a low hydrogen permeability coefficient means excellent hydrogen blocking performance, and a high hydrogen permeability coefficient means that hydrogen may easily permeate a material. The hydrogen permeability coefficient may be calculated according to ISO2782-1 and ISO15105-1 standards.

The hydrogen blocking layer 112 and the transport inner layer 111 may be adhesively coupled to each other by an adhesive layer 113, that is, an adhesive.

The adhesive layer 113 may be an adhesive for allowing the transport inner layer 111 and the hydrogen blocking layer 112 to adhere to each other, and may be an adhesive layer formed by the adhesive. The adhesive layer 113 may be an adhesive for allowing the transport outer layer 114, which will be described later, and the hydrogen blocking layer 112 to adhere to each other, and may be an adhesive layer formed by the adhesive.

The transport outer layer 114 may surround an outer side of the hydrogen blocking layer 112. The transport outer layer 114 may be formed of a polymer material such as high-density polyethylene (HEPE) or polyamide (PA).

When the transport inner pipe 11 is formed of a polymer material, a pipe may be manufactured by an extrusion scheme, and a process such as triple or quintuple extrusion may be applied depending on the number of layers constituting the transport inner pipe 11.

The outer protection layer 12 may surround an outer circumference of the transport inner pipe 11, the outer protection layer 12 may include a single layer or a plurality of layers, and according to the embodiment of the present invention, the outer protection layer 12 may include a structure reinforcement layer 121 and an outermost layer 122.

The structure reinforcement layer 121 may surround the outer side of the transport inner pipe 11, and the outermost layer 122 may surround an outer side of the structure reinforcement layer 121. The structure reinforcement layer 121 may be a reinforcement layer for ensuring a pressure-resistant characteristic to withstand a pressure generated by compressed hydrogen upon hydrogen transport, and may be preferably formed of fiber-reinforced plastic (FRP).

The outermost layer 122 may include a polymer material, and may serve as a buffer against an external shock.

The hydrogen detection unit 20 may detect hydrogen that may leak over an entire area of the hydrogen transport pipeline 10. The hydrogen detection unit 20 may include an optical fiber unit 21, an optical signal generator 22, and an optical characteristic detection unit 23.

The optical fiber unit 21 may be disposed in a longitudinal direction of the hydrogen transport pipeline 10 to detect the hydrogen. At least one optical fiber unit 21 may be provided. The optical fiber unit 21 may include an optical fiber 211 and an optical fiber protection layer 212.

The optical fiber 211 may detect the hydrogen leaking from the transport inner pipe 11. At least one optical fiber 211 may be provided.

The optical fiber unit 21 may be disposed in a regular wave shape in the longitudinal direction of the hydrogen transport pipeline 10, and may be spirally wound around an outer side of the hydrogen transport pipeline 10. The optical fiber protection layer 212 may surround an outer side of the at least one optical fiber 211 to protect the optical fiber. According to the present invention, the optical fiber protection layer 211 may be formed of a material having a high hydrogen permeability so that the optical fiber may easily detect the hydrogen leaking from the transport inner pipe 11. In this respect, a hydrogen permeability coefficient of the optical fiber protection layer 121 at 25 °C and 1.5 bar may be preferably greater than or equal to 10 times a hydrogen permeability coefficient of the hydrogen blocking layer 112 at 25 °C and 1.5 bar. In addition, more preferably, the hydrogen permeability coefficient of the optical fiber protection layer 212 at 25 °C and 1.5 bar may be greater than or equal to 10 cm³·cm/(m²·24h·atm). The optical fiber protection layer 212 may include at least one of polyvinyl chloride (PVC), nylon, low-smoke zero-halogen (LSZH), polyethylene (PE), and polypropylene (PP) .

In this case, the at least one optical fiber unit 21 may include a loose tube-type optical fiber unit in which the at least one optical fiber 211 is loosely accommodated in the optical fiber protection layer 212 having a tube shape.

In addition, the at least one optical fiber unit 21 may include a tight buffer-type optical fiber unit including the optical fiber protection layer 212 that tightly surrounds an outer circumference of the at least one optical fiber 211.

In addition, the at least one optical fiber unit 21 may be disposed between the transport inner pipe 11 and the outer protection layer 12, and may be spirally wound in a spiral shape around the outer circumference of the transport inner pipe 11.

In addition, the at least one optical fiber unit 21 may be spirally wound in a spiral shape around an outer circumference of the structure reinforcement layer 121 or the outermost layer 122.

The optical signal generator 22 may provide an optical signal obtained by converting an electrical signal into a light to the optical fiber 211. The optical signal may preferably use a wavelength band in which an optical loss value is changed when the hydrogen is leaking, and an optical signal in a wavelength band of 1240 nm may be used.

The optical characteristic detection unit 23 may detect an optical characteristic of the at least one optical fiber 11. As shown in (a) of FIG. 1, the optical characteristic detection unit 23 may be provided at an opposite end of the optical fiber 211 to detect the optical signal supplied from the optical signal generator 22 provided at one end of the optical fiber 211, or as shown in (b) of FIG. 1, the optical characteristic detection unit 23 may be provided at one end of the optical fiber 211 together with the optical signal generator 22 to detect the optical signal supplied from the optical signal generator 22 to the optical fiber 211 and reflected from a remote location of the optical fiber 211. The optical signal of the optical fiber 211 may be changed according to an external condition, in which when hydrogen is present at a periphery of the optical fiber 211, an absorption loss may be caused by the hydrogen so as to change an optical characteristic value, which may be detected by the optical characteristic detection unit 13.

In addition, regarding the optical signal generator 22 and the optical characteristic detection unit 23 in (b) of FIG. 1, an optical time domain reflectometer (OTDR), which is a known device including both the optical signal generator 22 and the optical characteristic detection unit 23, may be used.

The communication unit 30 may transmit and receive data to and from an external device.

The user input unit 40 may be provided as a touch screen, a keyboard, a voice recognition device, a motion recognition device, a mouse, or the like to input an instruction of a user.

The display unit 50 may be provided as a monitor to display various information to the user in the form of a text and an image. In particular, information on the optical characteristic value according to a change in the optical signal transmitted to the optical fiber 211 may be displayed. In addition, a notification such as a warning may be displayed to the user.

The control unit 60 may store a normal optical characteristic range of the optical fiber 211 for a normal state in which hydrogen is not detected from the optical fiber 211, and determine that hydrogen is leaking from the hydrogen transport pipeline 10 when an optical characteristic value of the optical fiber 211 for hydrogen, which is detected by the optical characteristic detection unit 23, is determined to exceed the normal optical characteristic range.

The control unit 60 may determine a degree of a hydrogen leak from the hydrogen transport pipeline 10 according to a degree by which the optical characteristic value acquired by the optical characteristic detection unit 23 deviates from the normal optical characteristic range. As a hydrogen leak amount of the hydrogen transport pipeline 10 increases, the optical characteristic value of the optical fiber 211 for the hydrogen may gradually deviate from the normal optical characteristic range. The hydrogen leak amount may be set in advance according to the degree of the deviation from the normal optical characteristic range.

In this case, the normal optical characteristic range of the optical fiber 211 may include a normal optical loss range in a wavelength band of 1240 nm.

In general, optical fibers are vulnerable to hydrogen and moisture components, which increase a loss of a communication wavelength, so that process improvement is performed to increase resistance against the hydrogen during an optical fiber manufacturing process, and reliability verification has to be performed therefor. Since optical fibers that do not adopt such technologies or processes are highly sensitive to hydrogen, the optical fibers may be installed/manufactured in the hydrogen transport pipeline 10 to diagnose/monitor the hydrogen leak over the whole hydrogen transport pipeline 10.

When a hydrogen leak phenomenon, that is, a loss increase phenomenon in the wavelength band of 1240 nm, occurs, a location of the optical fiber with an increased loss may be measured by using optical loss measurement equipment to perform pipeline repair at a location of the hydrogen transport pipeline corresponding to the location of the optical fiber, and due to the nature of the optical fiber, the increased loss caused by the hydrogen in the band of 1240nm is found to be restored when the hydrogen leak no longer occurs, or when a hydrogen gas at a periphery is removed, so that the optical fiber may be reused.

The control unit 60 may monitor a location in which the optical characteristic value exceeds the normal optical characteristic range based on the optical characteristic value of the optical fiber 211 in the longitudinal direction, which is detected by the optical characteristic detection unit 23, so that the location of the optical fiber at which the hydrogen is leaking may be calculated, and a hydrogen leak location of the hydrogen transport pipeline 10 corresponding to the location of the optical fiber may be calculated. In this case, when the optical fiber is arranged regularly, such as spiral winding in a spiral shape in the longitudinal direction of the hydrogen transport pipeline, the hydrogen leak location of the hydrogen transport pipeline may be calculated from information on a distance from the optical signal generator to the location of the optical fiber in which the hydrogen is leaking.

The control unit 60 may transmit the calculated hydrogen leak location of the hydrogen transport pipeline 10 to a preset user terminal or the like through the communication unit 30.

The control unit 60 may cut off hydrogen supply to the hydrogen transport pipeline 10. The control unit 60 may notify a central control system configured to control the hydrogen supply to the hydrogen transport pipeline 10 that the hydrogen is leaking, and may block the hydrogen supply or provide an alarm to a manager. In this case, the cut-off and the alarm generation control of the control unit 60 may be performed in a plurality of levels according to urgency by determining a degree of the hydrogen leak from the hydrogen transport pipeline according to a degree by which the optical characteristic value deviates from the normal optical characteristic range.

The control unit 60 may determine that the hydrogen is not leaking when the optical characteristic value of the optical fiber 211 for the hydrogen, which is detected by the optical characteristic detection unit 23, exceeds the normal optical characteristic range and remains within the normal optical characteristic range for a predetermined time or more.

### [Mode for Invention]

FIG. 2 is a view illustrating a hydrogen transport pipeline 10 and an optical fiber unit 21.

The hydrogen transport pipeline 10 may include the transport inner pipe 11, the structure reinforcement layer 121, and the outermost layer 122, which are arranged from an inner side to an outer side.

In this case, when viewing a section of the transport inner pipe 11 in detail, the transport inner layer 111, the adhesive layer 113, the hydrogen adhesion layer 112, the adhesive layer 113, and the transport outer layer 114 may be arranged from the inner side so as to be adhesively coupled to each other.

In addition, the optical fiber unit 21 may be disposed between the transport inner pipe 11 and the structure reinforcement layer 121, between the structure reinforcement layer 121 and the outermost layer 122, or on an outer side of the outermost layer 122 to detect the hydrogen.

FIG. 3 is a view illustrating an arrangement of the optical fiber unit 21.

While the hydrogen transport pipeline 10 is disposed, the optical fiber unit 21 may be spirally wound in a spiral shape. An angle of the spiral shape may be adjusted according to a hydrogen transport amount and a hydrogen transport pressure of the hydrogen transport pipeline 10. When the hydrogen transport amount, the hydrogen transport pressure, or the like of the hydrogen transport pipeline 10 is increased, the angle of the screw shape may be changed toward an upright direction to allow the optical fiber unit 21 to be densely arranged.

FIG. 4 is a view illustrating a loose tube-type optical fiber unit and a tight buffer-type optical fiber unit.

In this case, (a) of FIG. 4 shows a loose tube-type optical fiber unit in which the at least one optical fiber 211 is loosely accommodated in the optical fiber protection layer 212 having a tube shape, in which the optical fiber 211 is accommodated in the optical fiber protection layer 212 with a margin such that an accommodation space within the optical fiber protection layer 212 is sufficient.

In addition, (b) of FIG. 4 shows a tight buffer-type optical fiber unit including the optical fiber protection layer 212 that tightly surrounds the outer circumference of the at least one optical fiber 211, in which the at least one optical fiber 211 is packed and tightly accommodated in the optical fiber protection layer 212 without a margin accommodation space.

FIG. 5 is a flowchart of a hydrogen leak detection method for a hydrogen transport pipeline 10 according to the present invention.

A hydrogen leak detection method for a hydrogen transport pipeline 10 using an optical fiber 211 will be described.

At least one optical fiber unit 21, which includes at least one optical fiber 211 for detecting hydrogen leaking from the transport inner pipe 11 and an optical fiber protection layer 212 surrounding the at least one optical fiber 211, may be arranged in a longitudinal direction of the hydrogen transport pipeline 10 (S1).

An optical signal may be provided to the optical fiber 211 (S2).

The optical signal may be detected from the optical fiber 211 (S3).

It may be determined whether a detected optical characteristic value of the optical fiber 211 for hydrogen exceeds a normal optical characteristic range (S4).

It may be determined that the hydrogen is leaking from the hydrogen transport pipeline 10 when the detected optical characteristic value of the optical fiber 211 for the hydrogen is determined to exceed the normal optical characteristic range (S5) .

FIG. 6 is a view showing a modified example of a hydrogen leak detection method for a hydrogen transport pipeline 10.

At least one optical fiber unit 21, which includes at least one optical fiber 211 for detecting hydrogen leaking from the transport inner pipe 11 and an optical fiber protection layer 212 surrounding the at least one optical fiber 211, may be arranged in a longitudinal direction of the hydrogen transport pipeline 10 (S11).

An optical signal may be provided to the optical fiber 211 (S12).

The optical signal may be detected from the optical fiber 211 (S13).

It may be determined whether a detected optical characteristic value of the optical fiber 211 for hydrogen exceeds a normal optical characteristic range (S14).

It may be determined that the hydrogen is leaking from the hydrogen transport pipeline 10 when a light intensity of the detected optical signal exceeds a normal light intensity range (S15).

A degree of a hydrogen leak from the hydrogen transport pipeline 10 may be determined according to a degree by which the optical characteristic value of the optical fiber 211 for the hydrogen deviates from the normal optical characteristic range (S16).

Location information of the optical fiber for the optical characteristic value of the optical fiber 211 for the hydrogen may be stored, and a hydrogen leak location of the hydrogen transport pipeline 10 may be calculated based on the optical characteristic value detected by an optical characteristic detection unit 23 (S17).

The calculated hydrogen leak location of the hydrogen transport pipeline 10 may be transmitted to a preset user terminal (S18) .

Hydrogen supply to the hydrogen transport pipeline 10 may be cut off by a system or a manager (S19).

It may be determined that the hydrogen is not leaking when the optical characteristic value of the optical fiber 211 for the hydrogen, which is detected by the optical characteristic detection unit 23, exceeds the normal optical characteristic range and remains within the normal optical characteristic range for a predetermined time or more. (S20).

FIG. 7 is a graph showing a variation in an optical loss in a hydrogen atmosphere according to a wavelength of an optical signal. It may be found that an optical loss value in a wavelength band of 1240nm is changed most sensitively in a hydrogen atmosphere. Therefore, while other wavelength bands may be used, for more accurate hydrogen leak detection, it may be preferable to use the optical signal in the wavelength band of 1240 nm.

In addition, a graph after hydrogen is introduced into the optical fiber 211 may be compared with a graph after the hydrogen is removed. Accordingly, it may be found that an optical characteristic is restored when a hydrogen gas at a periphery is removed, so that the optical fiber may be reused.

According to the hydrogen leak detection system 1, since an optical fiber 211 capable of detecting hydrogen is disposed along a hydrogen transport pipeline 10, it may be determined in real time whether the hydrogen is leaking over an entire region of the hydrogen transport pipeline 10, so that a negligent accident caused by a hydrogen leak may be prevented, and thus safety of hydrogen use may be improved.

In addition, a hydrogen blocking layer 112 may prevent the hydrogen that is being transported from leaking to an outside, and a transport inner layer 111, the hydrogen blocking layer 112, and a transport outer layer 114 of a transport inner pipe 11 may prevent the hydrogen leak and increase stability of hydrogen transport of the hydrogen transport pipeline 10. In addition, the optical fiber protection layer 212 may allow the hydrogen to be easily permeated to detect the hydrogen leak by the optical fiber 211 for detecting the hydrogen, and stably protect the optical fiber 211 from an external shock and the like, and in some cases, a loose tube-type optical fiber unit and a tight buffer-type optical fiber unit may be used.

In addition, the optical fiber unit 21 may be protected by the outer protection layer 12 against the external shock, and may stably detect the hydrogen leak, so that stability of the hydrogen transport pipeline 10 against the external shock may be increased. In addition, the leaked hydrogen may be detected without being biased toward one area of a section of the hydrogen transport pipeline 10. In addition, the structure reinforcement layer 121 may increase the stability of the hydrogen transport pipeline 10 against the external shock, so that the hydrogen may be detected sensitively and accurately from the optical fiber 211.

In addition, a leak amount of the hydrogen leaking from the hydrogen transport pipeline 10 may be determined, and it may be determined that repair of the hydrogen transport pipeline 10 is completed so as to supply the hydrogen to the hydrogen transport pipeline 10 and operate normally. In addition, a hydrogen leak location of the hydrogen transport pipeline 10 may be calculated so that maintenance and repair may be facilitated, and maintenance and repair personnel may be dispatched to the hydrogen leak location to block a leak portion.

## Claims

1. A hydrogen leak detection system for a hydrogen transport pipeline including a pipe-shaped transport inner pipe for transporting a hydrogen fluid and an outer protection layer surrounding an outer circumference of the transport inner pipe, the hydrogen leak detection system comprising:
a hydrogen detection unit including at least one optical fiber unit disposed in a longitudinal direction of the hydrogen transport pipeline and including at least one optical fiber for detecting hydrogen leaking from the transport inner pipe and an optical fiber protection layer surrounding the at least one optical fiber, an optical signal generator for providing an optical signal to the at least one optical fiber, and an optical characteristic detection unit capable of detecting an optical characteristic of the optical fiber; and
a control unit for storing a normal optical characteristic range of the at least one optical fiber for a normal state in which hydrogen is not detected from the at least one optical fiber, and determining that hydrogen is leaking from the hydrogen transport pipeline when an optical characteristic value of the at least one optical fiber detected by the optical characteristic detection unit is determined to exceed the normal optical characteristic range.

2. The hydrogen leak detection system of claim 1, wherein the transport inner pipe includes a hydrogen blocking layer.

3. The hydrogen leak detection system of claim 2, wherein a hydrogen permeability coefficient of the hydrogen blocking layer at 25 °C and 1.5 bar is less than or equal to 1 cm³·cm/(m²·24h·atm).

4. The hydrogen leak detection system of claim 1, wherein the transport inner pipe includes a transport inner layer, a hydrogen blocking layer surrounding the transport inner layer, and a transport outer layer surrounding the hydrogen blocking layer.

5. The hydrogen leak detection system of claim 4, wherein the transport inner layer and the hydrogen blocking layer, and the hydrogen blocking layer and the transport outer layer adhere to each other by an adhesive layer.

6. The hydrogen leak detection system of claim 2, wherein a hydrogen permeability coefficient of the optical fiber protection layer at 25 °C and 1.5 bar is greater than or equal to 10 times a hydrogen permeability coefficient of the hydrogen blocking layer at 25 °C and 1.5 bar.

7. The hydrogen leak detection system of claim 1, wherein a hydrogen permeability coefficient of the optical fiber protection layer at 25 °C and 1.5 bar is greater than or equal to 10 cm³·cm/(m²·24h·atm).

8. The hydrogen leak detection system of claim 1, wherein the optical fiber protection layer includes at least one of polyvinyl chloride (PVC), nylon, low-smoke zero-halogen (LSZH), polyethylene (PE), and polypropylene (PP).

9. The hydrogen leak detection system of claim 1, wherein the at least one optical fiber unit is a loose tube-type optical fiber unit in which the at least one optical fiber is loosely accommodated in the optical fiber protection layer having a tube shape.

10. The hydrogen leak detection system of claim 1, wherein the at least one optical fiber unit is a tight buffer-type optical fiber unit including the optical fiber protection layer that tightly surrounds an outer circumference of the at least one optical fiber.

11. The hydrogen leak detection system of claim 1, wherein the at least one optical fiber unit is disposed between the transport inner pipe and the outer protection layer.

12. The hydrogen leak detection system of claim 11, wherein the at least one optical fiber unit is spirally wound in a spiral shape around the outer circumference of the transport inner pipe.

13. The hydrogen leak detection system of claim 1, wherein the outer protection layer includes a structure reinforcement layer surrounding the outer circumference of the transport inner pipe, and an outermost layer surrounding an outer circumference of the structure reinforcement layer.

14. The hydrogen leak detection system of claim 13, wherein the at least one optical fiber unit is spirally wound in a spiral shape around the outer circumference of the structure reinforcement layer.

15. The hydrogen leak detection system of claim 13, wherein the at least one optical fiber unit is spirally wound in a spiral shape around an outer circumference of the outermost layer.

16. The hydrogen leak detection system of claim 13, wherein the structure reinforcement layer is formed of fiber-reinforced plastic (FRP).

17. The hydrogen leak detection system of claim 1, wherein the normal optical characteristic range of the at least one optical fiber is a normal optical loss range in a wavelength band of 1240 nm, and
the control unit determines that the hydrogen is leaking when a detected optical loss of the optical signal exceeds the normal optical loss range.

18. The hydrogen leak detection system of claim 1, wherein the control unit determines a degree of a hydrogen leak from the hydrogen transport pipeline according to a degree by which the optical characteristic value of the at least one optical fiber deviates from the normal optical characteristic range.

19. The hydrogen leak detection system of claim 1, wherein the control unit determines that the hydrogen is not leaking when the optical characteristic value of the at least one optical fiber for the hydrogen, which is detected by the optical characteristic detection unit, exceeds the normal optical characteristic range and remains within the normal optical characteristic range for a predetermined time or more.

20. The hydrogen leak detection system of claim 1, wherein the control unit calculates a hydrogen leak location of the hydrogen transport pipeline based on the optical characteristic value detected by the optical characteristic detection unit.

21. The hydrogen leak detection system of claim 20, further comprising:
a communication unit for transmitting data to an external device,
wherein the control unit controls the communication unit to transmit information on the hydrogen transport pipeline, which includes the calculated hydrogen leak location of the hydrogen transport pipeline and cut-off of hydrogen supply to the hydrogen transport pipeline, to a preset external device.

22. A hydrogen leak detection method for a hydrogen transport pipeline including a pipe-shaped transport inner pipe for transporting a hydrogen fluid and an outer protection layer surrounding an outer circumference of the transport inner pipe, the hydrogen leak detection method comprising:
arranging at least one optical fiber unit, which includes at least one optical fiber for detecting hydrogen leaking from the transport inner pipe and an optical fiber protection layer surrounding the at least one optical fiber, in a longitudinal direction of the hydrogen transport pipeline;
providing an optical signal to the at least one optical fiber;
detecting the optical signal from the at least one optical fiber;
determining whether a detected optical characteristic value of the at least one optical fiber exceeds a normal optical characteristic range; and
determining that hydrogen is leaking from the hydrogen transport pipeline when the detected optical characteristic value of the optical fiber is determined to exceed the normal optical characteristic range.

23. The hydrogen leak detection method of claim 22, wherein the transport inner pipe includes a hydrogen blocking layer.

24. The hydrogen leak detection method of claim 23, wherein a hydrogen permeability coefficient of the hydrogen blocking layer at 25 °C and 1.5 bar is less than or equal to 1 cm³·cm/(m²·24h·atm).

25. The hydrogen leak detection method of claim 23, wherein a hydrogen permeability coefficient of the optical fiber protection layer at 25 °C and 1.5 bar is greater than or equal to 10 times a hydrogen permeability coefficient of the hydrogen blocking layer at 25 °C and 1.5 bar.

26. The hydrogen leak detection method of claim 22, wherein a hydrogen permeability coefficient of the optical fiber protection layer at 25 °C and 1.5 bar is greater than or equal to 10 cm³·cm/(m²·24h·atm).

27. The hydrogen leak detection method of claim 22, wherein the normal optical characteristic range of the at least one optical fiber is a normal optical loss range in a wavelength band of 1240 nm, and
the determining that the hydrogen is leaking from the hydrogen transport pipeline includes determining that the hydrogen is leaking when an optical loss of the detected optical signal exceeds the normal optical loss range.

28. A hydrogen transport pipeline capable of hydrogen leak detection by using an optical fiber, the hydrogen transport pipeline comprising:
a pipe-shaped transport inner pipe for transporting a hydrogen fluid;
an outer protection layer surrounding an outer circumference of the transport inner pipe; and
at least one optical fiber unit disposed outside the transport inner pipe in a longitudinal direction of the hydrogen transport pipeline, and including at least one optical fiber for detecting hydrogen leaking from the transport inner pipe and an optical fiber protection layer surrounding the at least one optical fiber.

29. The hydrogen transport pipeline of claim 28, wherein the transport inner pipe includes a hydrogen blocking layer.

30. The hydrogen transport pipeline of claim 29, wherein a hydrogen permeability coefficient of the hydrogen blocking layer at 25 °C and 1.5 bar is less than or equal to 1 cm^{3·}cm/(m²·24h·atm).

31. The hydrogen transport pipeline of claim 28, wherein the transport inner pipe includes a transport inner layer, a hydrogen blocking layer surrounding the transport inner layer, and a transport outer layer surrounding the hydrogen blocking layer.

32. The hydrogen transport pipeline of claim 31, wherein the transport inner layer and the hydrogen blocking layer, and the hydrogen blocking layer and the transport outer layer adhere to each other by an adhesive layer.

33. The hydrogen transport pipeline of claim 29, wherein a hydrogen permeability coefficient of the optical fiber protection layer at 25 °C and 1.5 bar is greater than or equal to 10 times a hydrogen permeability coefficient of the hydrogen blocking layer at 25 °C and 1.5 bar.

34. The hydrogen transport pipeline of claim 28, wherein a hydrogen permeability coefficient of the optical fiber protection layer at 25 °C and 1.5 bar is greater than or equal to 10 cm³·cm/(m²·24h·atm).

35. The hydrogen transport pipeline of claim 34, wherein the optical fiber protection layer includes at least one material among polyvinyl chloride (PVC), nylon, low-smoke zero-halogen (LSZH), polyethylene (PE), and polypropylene (PP).

36. The hydrogen transport pipeline of claim 28, wherein the at least one optical fiber unit is a loose tube-type optical fiber unit in which the at least one optical fiber is loosely accommodated in the optical fiber protection layer having a tube shape.

37. The hydrogen transport pipeline of claim 28, wherein the at least one optical fiber unit is a tight buffer-type optical fiber unit including the optical fiber protection layer that tightly surrounds an outer circumference of the at least one optical fiber.

38. The hydrogen transport pipeline of claim 28, wherein the at least one optical fiber unit is disposed between the transport inner pipe and the outer protection layer.

39. The hydrogen transport pipeline of claim 28, wherein the at least one optical fiber unit is spirally wound in a spiral shape around the outer circumference of the transport inner pipe.

40. The hydrogen transport pipeline of claim 28, wherein the outer protection layer includes a structure reinforcement layer surrounding the outer circumference of the transport inner pipe, and an outermost layer surrounding an outer circumference of the structure reinforcement layer.

41. The hydrogen transport pipeline of claim 40, wherein the at least one optical fiber unit is spirally wound in a spiral shape around the outer circumference of the structure reinforcement layer.

42. The hydrogen transport pipeline of claim 40, wherein the at least one optical fiber unit is spirally wound in a spiral shape around an outer circumference of the outermost layer.

43. The hydrogen transport pipeline of claim 40, wherein the structure reinforcement layer is formed of fiber-reinforced plastic (FRP).
